# EUROPEAN PATENT APPLICATION

(11) **EP 3 998 793 A1**
(43) Date of publication of application: **18.05.2022**
(21) Application number: 19936828.3
(22) Date of filing: 10.07.2019
(51) Int. Cl.: H04W 16/28, H04W 72/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP); HARADA, Hiroki, Tokyo 100-6150 (JP)
(74) Representative: Hoffmann Eitle
(86) International application number: PCT/JP2019/027410
(87) International publication number: WO 2021/005764

(57) **Abstract**

A terminal according to one aspect of the present disclosure includes a receiving section that receives configuration information about one or more sounding reference signal (SRS) resource sets with antenna switching as usage, and a control section that controls, on the basis of an antenna port capable of transmitting an uplink shared channel at full power, transmission of SRS resources included in the one or more SRS resource sets. According to one aspect of the present disclosure, it is possible to appropriately control UL transmission.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (e.g., NR), supporting codebook-based transmission using a precoding matrix is under study. A method for performing uplink transmission at full power by a user terminal (User Equipment (UE)) is also under study.

Regarding the UE having a power amplifier that fails to output maximum rated power, a mode (which may be referred to as, for example, mode 2) configured such that one or a plurality of SRS resources included in one sounding reference signal (SRS) resource set with "codebook" as usage have the different numbers of SRS ports is under study. The UE to operate in mode 2 may perform full power transmission by using some antenna ports, instead of all antenna ports.

On the other hand, in Rel-15 NR, antenna switching (which may be referred to as antenna port switching) as sounding reference signal (SRS) usage is configurable. For example, SRS antenna switching may be used when downlink CSI acquisition is performed with use of an uplink SRS in a time division duplex (TDD) band.

However, SRS switching operation of Rel-15 NR does not take UE capability for full power transmission into consideration. In the SRS switching operation of Rel-15 NR, correspondence between a UE antenna port number and an antenna port to perform SRS antenna switching is indefinite, and thus appropriate SRS switching depending on UE power amplifier capability is not available. In this case, an increase in communication throughput may be suppressed.

Thus, an object of the present disclosure is to provide a terminal and a radio communication method that can appropriately transmit an SRS.

### Solution to Problem

A terminal according to one aspect of the present disclosure includes a receiving section that receives configuration information about one or more sounding reference signal (SRS) resource sets with antenna switching as usage, and a control section that controls, on the basis of an antenna port capable of transmitting an uplink shared channel at full power, transmission of SRS resources included in the one or more SRS resource sets. Advantageous Effects of Invention

According to one aspect of the present disclosure, it is possible to appropriately transmit an SRS.

### Brief Description of Drawings

FIG. 1 is a diagram to show an example of associations between precoder types and TPMI indices;
FIG. 2 is a diagram to show an example of UE structures assumed by UE capability 1 to UE capability 3 related to full power transmission;
FIGS. 3A and 3B are diagrams to show an example of an SRS resource set for 1T2R;
FIGS. 4A and 4B are diagrams to show an example of an SRS resource set for 1T1R;
FIGS. 5A and 5B are diagrams to show an example of an SRS resource set for 2T2R;
FIGS. 6A and 6B are diagrams to show an example of an SRS resource set for 1T4R;
FIGS. 7A and 7B are diagrams to show another example of the SRS resource set for 1T4R;
FIGS. 8A and 8B are diagrams to show an example of an SRS resource set for 2T4R;
FIGS. 9A and 9B are diagrams to show an example of an SRS resource set for 4T4R;
FIGS. 10A and 10B are diagrams to show an example of structures of antenna ports assumed in one embodiment;
FIG. 11 is a diagram to show an example of TPMIs assumed for PUSCH transmission in a first embodiment;
FIG. 12 is a diagram to show an example of TPMIs assumed for PUSCH transmission in a second embodiment;
FIGS. 13A and 13B are diagrams to show an example of SRS antenna switching for an SRS resource set for 1T4R in the second embodiment;
FIGS. 14A and 14B are diagrams to show another example of the SRS antenna switching for the SRS resource set for 1T4R in the second embodiment;
FIGS. 15A and 15B are diagrams to show still another example of the SRS antenna switching for the SRS resource set for 1T4R in the second embodiment;
FIGS. 16A and 16B are diagrams to show an example of SRS antenna switching for an SRS resource set for 2T4R in the second embodiment;
FIGS. 17A and 17B are diagrams to show an example of SRS antenna switching for an SRS resource set for 4T4R in the second embodiment;
FIGS. 18A and 18B are diagrams to show an example of SRS antenna switching for an SRS resource set for 1T4R in a third embodiment;
FIGS. 19A and 19B are diagrams to show another example of the SRS antenna switching for the SRS resource set for 1T4R in the third embodiment;
FIGS. 20A and 20B are diagrams to show still another example of the SRS antenna switching for the SRS resource set for 1T4R in the third embodiment;
FIGS. 21A and 21B are diagrams to show an example of SRS antenna switching for an SRS resource set for 2T4R in the third embodiment;
FIGS. 22A and 22B are diagrams to show an example of SRS antenna switching for an SRS resource set for 4T4R in the third embodiment;
FIG. 23 is a diagram to show an example of a schematic structure of a radio communication system according to one embodiment;
FIG. 24 is a diagram to show an example of a structure of a base station according to one embodiment;
FIG. 25 is a diagram to show an example of a structure of a user terminal according to one embodiment; and
FIG. 26 is a diagram to show an example of a hardware structure of the base station and the user terminal according to one embodiment.

### Description of Embodiments

### (SRS)

In NR, sounding reference signal (SRS) usage have diversity. SRSs for NR are used for not only measurement of uplink (UL) CSI also used in existing LTE (LTE Rel. 8 to Rel. 14), but also measurement of downlink (DL) CSI, beam management, and the like.

One or a plurality of SRS resources may be configured for a UE. The SRS resource may be identified by an SRS resource index (SRI).

Each SRS resource may have one or a plurality of SRS ports (may correspond to one or a plurality of SRS ports). For example, the number of ports for each SRS may be 1, 2, 4, and so on.

One or a plurality of SRS resource sets may be configured for the UE. One SRS resource set may be related to a given number of SRS resources. The UE may commonly use a higher layer parameter with respect to SRS resources included in one SRS resource set. Note that a resource set in the present disclosure may be interpreted as a set, a resource group, a group, and the like.

Information related to an SRS resource or a resource set may be configured for the UE with use of higher layer signaling or physical layer signaling (e.g., downlink control information (DCI)) or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), remaining minimum system information (RMSI), other system information (OSI) or the like.

SRS configuration information (e.g., an RRC information element "SRS-Config") may include SRS resource set configuration information, SRS resource configuration information, and the like.

The SRS resource set configuration information (e.g., an RRC parameter "SRS-ResourceSet") may include an SRS resource set ID (Identifier) (SRS-ResourceSetId), a list of SRS resource IDs (SRS-ResourceIds) used in the resource set, an SRS resource type, information about SRS usage, or the like. Note that the SRS resource ID may be referred to as an SRS Resource ID (SRI).

Here, the SRS resource type may indicate any one of a periodic SRS (P-SRS), a semi-persistent SRS (SP-SRS), and an aperiodic SRS (A-SRS). Note that the UE may transmit the P-SRS and SP-SRS periodically (or may transmit the P-SRS and SP-SRS periodically after activation). The UE may transmit the A-SRS on the basis of an SRS request of DCI.

An SRS usage (an RRC parameter "usage" or L1 (Layer-1)) parameter "SRS-SetUse" may be, for example, beam management (beamManagement), codebook, non-codebook (nonCodebook), antenna switching (antennaSwitching), or the like. For example, an SRS for codebook or non-codebook usage may be used for determination of a precoder for codebook-based or non-codebook-based uplink shared channel (Physical Uplink Shared Channel (PUSCH)) transmission based on the SRI.

It may be assumed that only one SRS resource with respect to each SRS resource set is capable of transmitting an SRS for beam management usage in a given time instant. Note that when a plurality of SRS resources respectively belong to different SRS resource sets, these SRS resources may be transmitted at the same time.

The SRS resource configuration information (e.g., an RRC parameter "SRS-Resource") may include information related to an SRS resource ID (SRS-ResourceId), the number of SRS ports, an SRS port number, transmission comb, SRS resource mapping (e.g., time and/or frequency resource location, resource offset, resource periodicity, the number of repetitions, the number of SRS symbols, SRS bandwidth, or the like), hopping, an SRS resource type, a sequence ID, a spatial relation, or the like.

The UE may transmit the SRS at adjacent symbols for the number of SRS symbols out of the last 6 symbols in one slot. Note that the number of the SRS symbols may be 1, 2, 4, and so on.

The UE may switch a BWP (Bandwidth Part) for transmitting the SRS for each slot, or may switch an antenna. The UE may apply at least one of intra-slot hopping and inter-slot hopping to SRS transmission.

### (PUSCH Precoder)

For NR, a UE that supports at least one of codebook (CB)-based transmission and non-codebook (NCB)-based transmission is under study.

For example, the UE that judges a precoder (precoding matrix) for at least one of CB-based and NCB-based uplink shared channel (Physical Uplink Shared Channel (PUSCH)) transmission by using at least a sounding reference signal (SRS) resource index (SRI) is under study.

In a case of CB-based transmission, the UE may determine the precoder for PUSCH transmission on the basis of the SRI, a transmitted rank indicator (TRI), a transmitted precoding matrix indicator (TPMI), and the like. In a case of NCB-based transmission, the UE may determine the precoder for PUSCH transmission on the basis of the SRI.

The SRI, TRI, TPMI, and the like may be notified to the UE with use of downlink control information (DCI). The SRI may be designated by an SRS Resource Indicator field (SRI field) in the DCI, or may be designated by a parameter "srs-ResourceIndicator" included in an RRC information element "ConfiguredGrantConfig" for a configured grant PUSCH. The TRI and TPMI may be designated by a precoding information and number of layers field ("Precoding information and number of layers" field) in the DCI.

The UE may report UE capability information related to a precoder type, and a precoder type based on the UE capability information may be configured for the UE by higher layer signaling from a base station. The UE capability information may be precoder type information (which may be represented by an RRC parameter "pusch-TransCoherence") used by the UE for PUSCH transmission.

The UE may determine the precoder used for PUSCH transmission on the basis of precoder type information (which may be represented by an RRC parameter "codebookSubset") included in PUSCH configuration information ("PUSCH-Config" information element for RRC signaling) notified by the higher layer signaling. A subset of PMIs designated by the TPMI may be configured for the UE by the codebookSubset.

Note that the precoder type may be designated by any one or combinations of at least two of fully coherent (full coherent, coherent), partial coherent (partially coherent), and non-coherent (non coherent) (for example, the combination may be represented by a parameter such as "fully, partial, and non-coherent (fullyAndPartialAndNonCoherent)" and "partial and non-coherent (partialAndNonCoherent)") .

The fully coherent may mean that all antenna ports used for transmission are synchronized (which may be expressed as phase matching is available, the precoder to be applied is the same, or the like). The partial coherent may mean that some ports of antenna ports used for transmission are synchronized with each other, but the some ports are not synchronized with another port. The non-coherent may mean that each antenna port used for transmission is not synchronized.

Note that the UE that supports the fully coherent precoder type may be assumed to support the partial coherent and non-coherent precoder type. The UE that supports the partial coherent precoder type may be assumed to support the non-coherent precoder type.

The precoder type, coherent capability, coherency, PUSCH transmission coherence, a coherent type, a coherence type, a codebook type, a codebook subset, a codebook subset type, and the like may be interchangeably interpreted.

The UE may determine a precoding matrix corresponding to a TPMI index obtained for DCI to schedule UL transmission on the basis of a plurality of precoders (which may be referred to as precoding matrices, codebooks, and so on) for CB-based transmission.

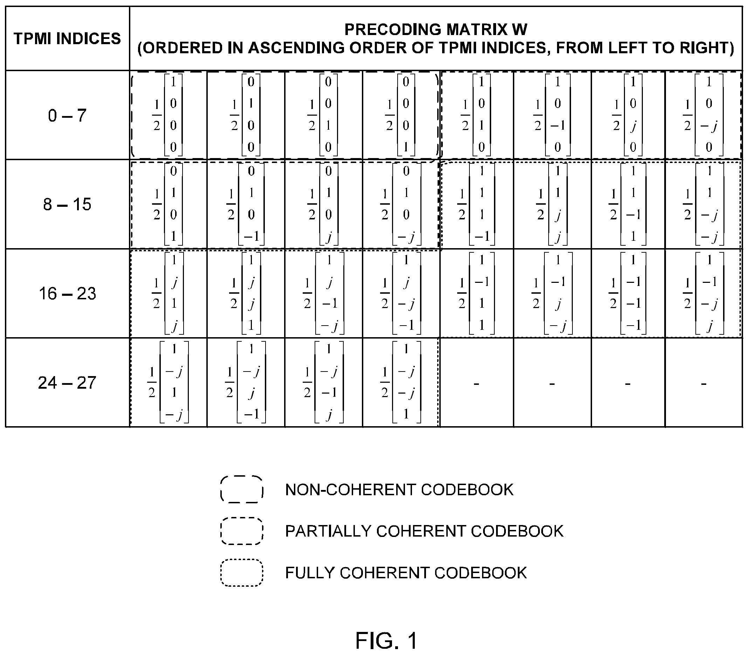

FIG. 1 is a diagram to show an example of an association between the precoder type and the TPMI index. FIG. 1 corresponds to a table for a precoding matrix W for single layer transmission using 4 antenna ports in Discrete Fourier Transform spread OFDM (DFT-s-OFDM) (in other words, transform precoding is enabled).

In FIG. 1, when a precoder type (codebookSubset) is fully, partial, and non-coherent (fullyAndPartialAndNonCoherent), any one of TPMIs 0 to 27 is notified to the UE to single layer transmission. When the precoder type is partial and non-coherent (partialAndNonCoherent), any one of TPMIs 0 to 11 is configured for the UE to single layer transmission. When the precoder type is non-coherent (nonCoherent), any one of TPMIs 0 to 3 is configured for the UE to single layer transmission.

FIG. 1 is a table that is defined in current Rel-15 NR. In this table, letting transmit power for fully coherent corresponding to indices 12 to 27 be 1 (= (1/2)² * 4), transmit power for partial coherent corresponding to indices 4 to 11 is 1/2 (= (1/2)² * 2), and transmit power for non-coherent corresponding to indices 0 to 3 is 1/4 (= (1/2)² * 1).

In other words, according to the current Rel-15 NR specifications, when the UE performs codebook-based transmission by using a plurality of ports, using a part of codebooks may lower transmit power as compared to the codebook-based transmission using a single port (full power transmission is not available).

Note that as shown in FIG. 1, a precoding matrix in which only one of elements of each row is not zero may be referred to as a non-coherent codebook. A precoding matrix in which only a given number of elements of each row (except all of the elements) is not zero may be referred to as a partial coherent codebook. A precoding matrix in which none of elements of each row are zero may be referred to as a fully coherent codebook.

Note that in the present disclosure, the partial coherent codebook may correspond to a codebook obtained by removing a codebook corresponding to a TPMI designated for the UE for which a non-coherent codebook subset (e.g., an RRC parameter "codebookSubset" = "nonCoherent") is configured from codebooks (precoding matrices) corresponding to a TPMI designated by DCI for codebook-based transmission by the UE for which a partial coherent codebook subset (e.g., an RRC parameter "codebookSubset" = "partialAndNonCoherent") is configured (in other words, a codebook with TPMIs = 4 to 11 in a case of single layer transmission with 4 antenna ports) .

Note that in the present disclosure, the fully coherent codebook may correspond to a codebook obtained by removing a codebook corresponding to a TPMI designated for the UE for which a partial coherent codebook subset (e.g., an RRC parameter "codebookSubset" = "partialAndNonCoherent") is configured from codebooks (precoding matrices) corresponding to a TPMI designated by DCI for codebook-based transmission by the UE for which a fully coherent codebook subset (e.g., an RRC parameter "codebookSubset" = "fullyAndPartialAndNonCoherent") is configured (in other words, a codebook with TPMIs = 12 to 27 in a case of single layer transmission with 4 antenna ports).

### (UE Capability for Full Power Transmission)

Performing full power UL transmission appropriately is preferable even when a codebook is used. Thus, for NR, UE capability related to codebook-based full power UL transmission using a plurality of power amplifiers (PAs) are under study. In discussions of the NR thus far, UE capability 1 to UE capability 3 have been proposed as follows:
- UE capability 1: a PA (full rated PA) that can output maximum rated power is supported (or included) in respective transmission chains (Tx chains),
- UE capability 2: none of the transmission chains support the full rated PA, and
- UE capability 3: a subset (part) of the transmission chains supports the full rated PA.

Note that the UE having at least one of UE capability 1 to UE capability 3 may mean that full power for UL transmission is supported. Apart from UE capability 1 to UE capability 3, the UE may report capability information indicating that UL full power transmission capability is supported to a network (e.g., the base station). Supporting full power transmission may be configured for the UE from the network.

UE capability 1/2/3 may be interpreted as UE capability 1/2/3 related to full power transmission, full power transmission type 1/2/3, power allocation type 1/2/3, and so on, respectively. In the present disclosure, a type, a mode, capability, and so on may be interchangeably interpreted. In the present disclosure, 1/2/3 may be interpreted as a set of arbitrary numbers or letters, such as A/B/C.

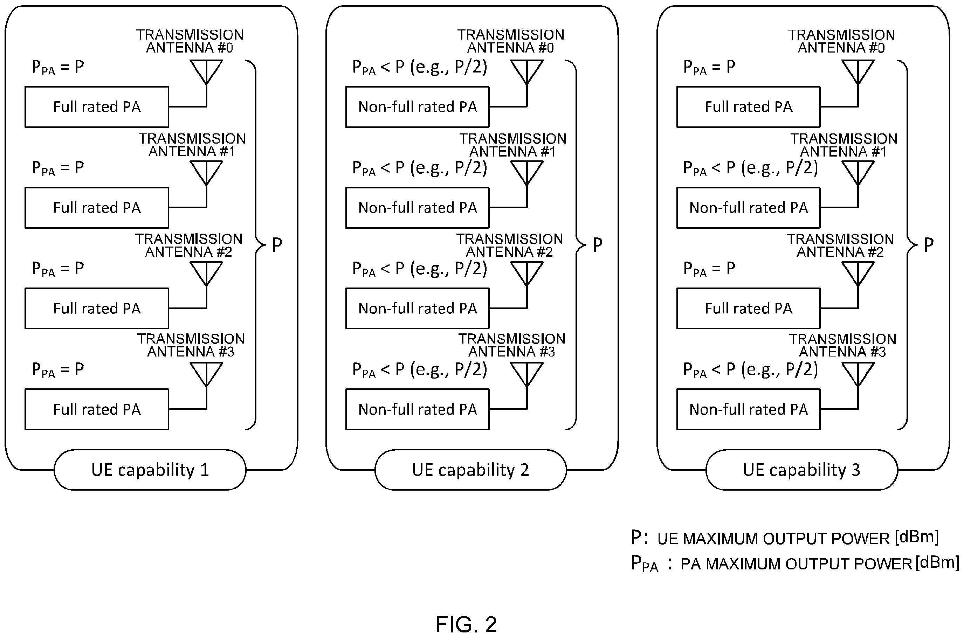

FIG. 2 is a diagram to show an example of UE structures assumed by UE capability 1 to UE capability 3 related to full power transmission. FIG. 2 briefly shows only PAs and transmission antenna ports (which may be interpreted as transmission antennas, ports, and so on) as the UE structures. Note that FIG. 2 shows an example in which the number of the PAs and the number of the transmission antenna ports are both 4, but the present disclosure is not limited to this.

Note that P denotes UE maximum output power [dBm], and P_{PA} denotes PA maximum output power [dBm]. Note that P may be, for example, 23 dBm in a power class 3 UE, and may be, for example, 26 dBm in a power class 2 UE. The present disclosure assumes P_{PA} ≤ P, but embodiments according to the present disclosure may be employed in a case where P_{PA} > P.

A structure for UE capability 1 is assumed to be higher cost in implementation, but the structure can perform full power transmission by using one or more arbitrary antenna ports. A structure for UE capability 2 includes only non-full rated PAs and is expected to be implementable at a lower cost. However, using only one antenna port does not enable full power transmission, and thus controlling of a phase, amplitude, and the like of a signal input into each PA is needed.

A structure for UE capability 3 is in the middle of the structure for UE capability 1 and the structure for UE capability 2. Antenna ports (in the present example, transmission antennas #0 and #2) that can perform full power transmission coexist with antenna ports (in the present example, transmission antennas #1 and #3) that cannot perform full power transmission.

Note that indices, the number, and the like of the antenna ports of UE capability 3 that can perform full power transmission are not limited to this. The present example assumes non-full rated PA P_{PA} = P/2, but a value of P_{PA} is not limited to this.

Incidentally, it is studied that at least one of two modes (modes 1 and 2) related to full power transmission operation is configured for the UE to support UE capability 2 or 3. Modes 1 and 2 may be referred to as operation modes 1 and 2 and so on, respectively.

Here, mode 1 may be a mode (which may be referred to as, for example, a first full power transmission mode) configured for the UE such that one or a plurality of SRS resources included in one SRS resource set with "codebook" as usage have the same number of SRS ports. The UE to operate in mode 1 may perform full power transmission by using all antenna ports.

Using a TPMI subset to combine ports in one layer for achieving full power transmission may be configured for the UE to operate in mode 1 from the network. A new codebook subset may be introduced to only a rank value that includes a TPMI precoder corresponding to "fullyAndPartialAndNonCoherent" defined in Rel-15 NR and is not used for full power transmission.

On the other hand, mode 2 may be a mode (which may be referred to as, for example, a second full power transmission mode) configured for the UE such that one or a plurality of SRS resources included in one SRS resource set with "codebook" as usage have the different numbers of SRS ports. The UE to operate in mode 2 may perform full power transmission by using some antenna ports, instead of all antenna ports.

The UE to operate in mode 2 may transmit the PUSCH and SRS by using the same method regardless of whether antenna virtualization is used. In order to support SRS resources with more than one port, a TPMI set for achieving full power transmission may be notified to the UE in mode 2. In a case of mode 2, two or more SRS resources may be configured for one SRS resource set (in Rel-15 NR, at most two SRS resources).

Mode 1 has the advantage that a necessary SRI field size is allowed to be smaller as compared to mode 2 (full power transmission with one SRS resource is possible).

Mode 2 has the advantage that single port transmission and multi port transmission can be dynamically switched to each other by DCI as compared to mode 1. Mode 2 can also perform full power transmission using some antenna ports, and thus, for example, mode 2 can perform full power transmission by using only an antenna having a full rated PA and can perform full power transmission by using only a coherent antenna.

### (SRS Antenna Switching)

Incidentally, in Rel-15 NR, as mentioned above, antenna switching (which may be referred to as antenna port switching) as SRS usage is configurable. For example, SRS antenna switching may be used when downlink CSI acquisition is performed with use of an uplink SRS in a time division duplex (TDD) band.

For example, regarding the UE having capability that the number of antenna ports available for transmission is less than the number of antenna ports available for reception, UL SRS measurement may be used for determination of a DL precoder.

Note that the UE may report UE capability information (e.g., an RRC parameter "supportedSRS-TxPortSwitch") indicating a pattern of switching of transmission ports for supported SRSs to the network. This pattern is expressed in a "txry" format, such as "t1r2" and "t2r4," and this may mean that SRS transmission can be performed with use of x pieces of antenna ports out of y pieces of antennas in total (which may be denoted as xTyR). Here, y may correspond to all of UE reception antennas or UE reception antenna subsets.

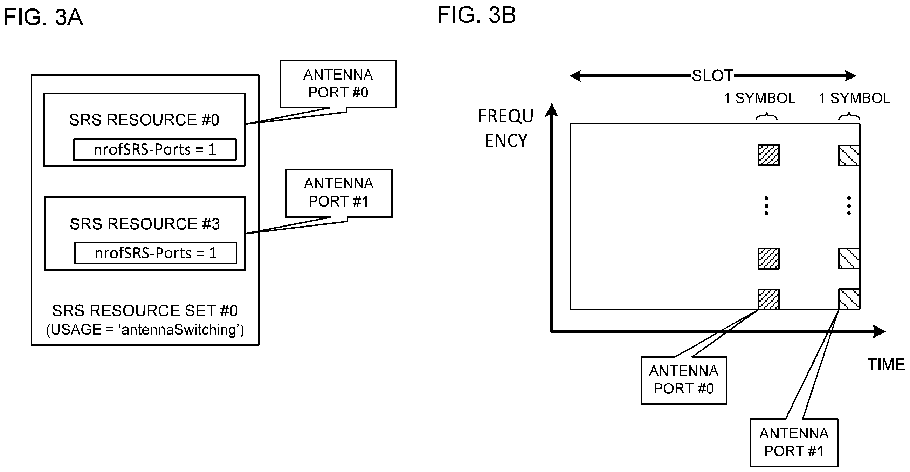

FIGS. 3A and 3B are diagrams to show an example of an SRS resource set for 1T2R. FIG. 3A shows one SRS resource set (SRS resource set #0) with antenna switching ("antennaSwitching") as usage configured for the UE by higher layer signaling (e.g., RRC signaling).

SRS resource set #0 includes SRS resource #0 with the number of SRS ports 1 (nrofSRS-Ports = 1 (port1)) and SRS resource #3 with the number of SRS ports 1 (nrofSRS-Ports = 1 (port1)). Note that SRS resource indices (#3 and #7) of FIG. 3A are examples, and are not limited to these values (the same is applied to the following drawings).

FIG. 3B is a diagram to show an example of mapping of SRS resources corresponding to FIG. 3A. The present example describes a case where the number of symbols (nrofSymbols) for each of SRS resources #0 and #3 is configured to be 1 for the UE in the SRS resource set of FIG. 3A. Note that the following examples of the present disclosure will also be described as examples with an assumption that the number of symbols for SRS resources is 1, but the number of the symbols is not limited to this.

The UE may assume that start symbols for each SRS resource in an SRS resource set with antenna switching as usage are different from each other. The UE may assume that a guard period exists between SRS resources of the same SRS resource set.

The guard period may be referred to as a non-transmission period, an SRS switching period, a port switching period, and so on. The UE may assume that an arbitrary signal (e.g., another arbitrary signal) is not transmitted in the guard period in a slot in which a PUSCH is transmitted.

The UE may turn an antenna port used for next SRS transmission on (which may be referred to as enabling, activating, and so on) by using the guard period.

A length of the guard period between the SRS resources may be equal to or greater than a minimum guard period Y (Y = 1 or 2 symbols) between SRS resources indicated in 3GPP TS 38.214 Table 6.2.1.2-1. For example, the length may be Y = 1 (when subcarrier spacing (SCS) = 15, 30, or 60 kHz), Y = 2 (when SCS = 120 kHz), or the like.

In FIG. 3B, the UE transmits two SRS resources by using 2 symbols in total. As described in FIG. 3B, when a plurality of SRS resources are transmitted at non-overlapping symbols, the UE may assume that frequency resources for the plurality of the SRS resources overlap with each other (e.g., the plurality of the SRS resources are transmitted with use of the same comb, the same frequency resource, or the like). The same may be applied to the following drawings.

The UE may transmit SRS resource #0 with port #0 at one symbol of FIG. 3B, and may transmit SRS resource #3 with port #1 at another symbol.

A combination of each SRS resource and a corresponding port may be referred to as an SRS pattern, or may be simply referred to as a pattern and so on. Which pattern (in other words, correspondence between a resource and a port) is used may depend on UE implementation (the UE may determine an arbitrary pattern), or may be configured for the UE by higher layer signaling, physical layer signaling, or a combination of these.

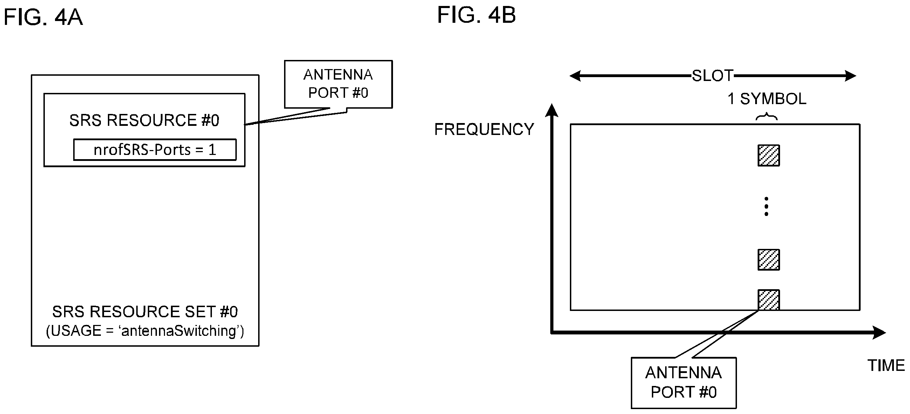

FIGS. 4A and 4B are diagrams to show an example of an SRS resource set for 1T1R. One SRS resource set (SRS resource set #0), shown in FIG. 4A, with antenna switching as usage includes SRS resource #0 with the number of SRS ports 1 (nrofSRS-Ports = 1 (port1)).

FIG. 4B is a diagram to show an example of mapping of SRS resources corresponding to FIG. 4A. In FIG. 4B, the UE transmits one SRS resource by using one symbol. The UE may transmit SRS resource #0 with port #0 at one symbol of FIG. 4B.

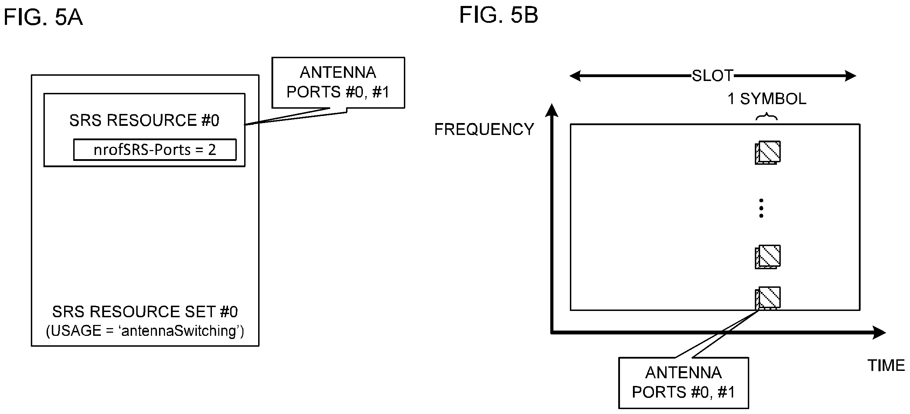

FIGS. 5A and 5B are diagrams to show an example of an SRS resource set for 2T2R. One SRS resource set (SRS resource set #0), shown in FIG. 5A, with antenna switching as usage includes SRS resource #0 with the number of SRS ports 2 (nrofSRS-Ports = 2 (ports2)).

FIG. 5B is a diagram to show an example of mapping of SRS resources corresponding to FIG. 5A. In FIG. 5B, the UE transmits one SRS resource by using one symbol. The UE may transmit SRS resource #0 with port #0 at one symbol of FIG. 5B.

Note that when transmitting SRSs from a plurality of antenna ports with respect to one SRS resource (in the present example, SRS resource #0) (nrofSRS-Ports > 1), the UE may apply an orthogonalization process (e.g., cyclic shift, orthogonal cover code, or the like) to signals of the plurality of the antenna ports.

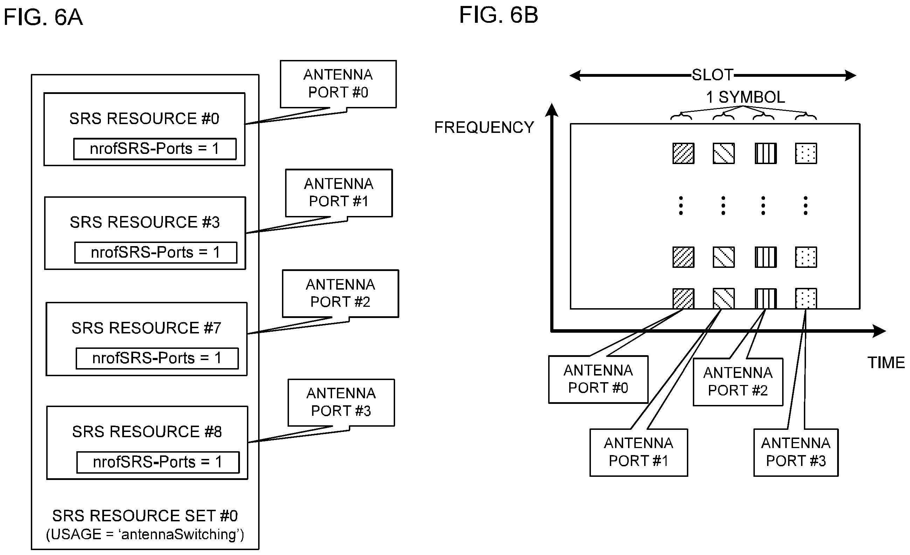

FIGS. 6A and 6B are diagrams to show an example of an SRS resource set for 1T4R. FIG. 6A shows an example of an SRS resource set with antenna switching as usage in which a resource type (an RRC parameter "resourceType") is periodic or semi-persistent.

For 1T4R, one SRS resource set in which the resource type is periodic or semi-persistent may be configured. The SRS resource set may include four SRS resources transmitted at different symbols. One SRS resource set (SRS resource set #0) of FIG. 6A includes four SRS resources #0, #3, #7, and #8 with the number of SRS ports 1 (nrofSRS-Ports = 1 (port1)).

FIG. 6B is a diagram to show an example of mapping of SRS resources corresponding to FIG. 6A. In FIG. 6B, the UE transmits four SRS resources by using 4 symbols in total. The UE may transmit, at different symbols of FIG. 6B, SRS resource #0 with port #0, SRS resource #3 with port #1, SRS resource #7 with port #2, and SRS resource #8 with port #3.

Note that FIG. 6B applies configuration in which a guard period exists between respective SRS resources, but ports can be enabled beforehand with respect to the SRS resource set in which the resource type is periodic or semi-persistent, and thus configuration without the guard period (e.g., a plurality of SRS resources are temporally adjacent to each other) may be applied to FIG. 6B.

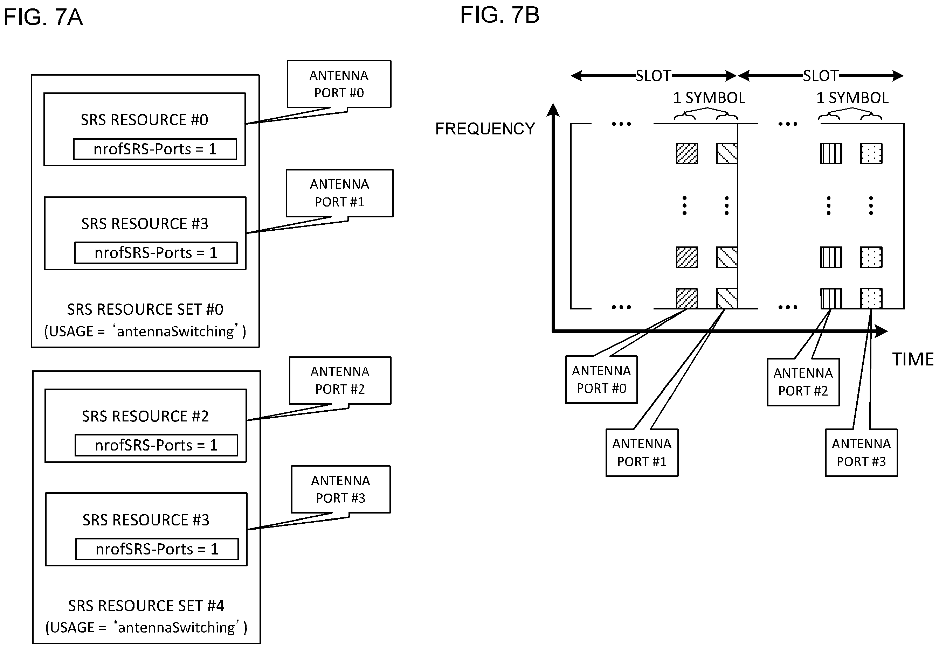

FIGS. 7A and 7B are diagrams to show another example of the SRS resource set for 1T4R. FIG. 7A shows an example of an SRS resource set with antenna switching as usage in which a resource type (an RRC parameter "resourceType") is aperiodic.

For 1T4R, two SRS resource sets in which the resource type is aperiodic may be configured. The two SRS resource sets may include four SRS resources in total transmitted at different symbols of different slots. SRS ports for each SRS resource given to the two SRS resource sets may be related to different UE antenna ports. Two SRS resources may be configured for the two SRS resource sets, respectively, or one SRS resource may be configured for one and three SRS resources may be configured for the other.

One SRS resource set (SRS resource set #0) of FIG. 7A includes two SRS resources #0 and #3 with the number of SRS ports 1 (nrofSRS-Ports = 1 (port1)). Another one SRS resource set (SRS resource set #4) of FIG. 7A includes two SRS resources #2 and #3 with the number of SRS ports 1 (nrofSRS-Ports = 1 (port1)).

FIG. 7B is a diagram to show an example of mapping of SRS resources corresponding to FIG. 7A. In FIG. 7B, the UE transmits four SRS resources by using 4 symbols in total of 2 slots. The UE may transmit, at different symbols of the first slot of FIG. 7B, SRS resource #0 for SRS resource set #0 with port #0 and SRS resource #3 for SRS resource set #0 with port #1. The UE may transmit, at different symbols of the second slot of FIG. 7B, SRS resource #2 for SRS resource set #4 with port #2 and SRS resource #3 for SRS resource set #4 with port #3.

The UE may transmit an SRS for an SRS resource set in which an SRS resource type is aperiodic on the basis of indication (e.g., an SRS request or an SRS trigger) included in DCI.

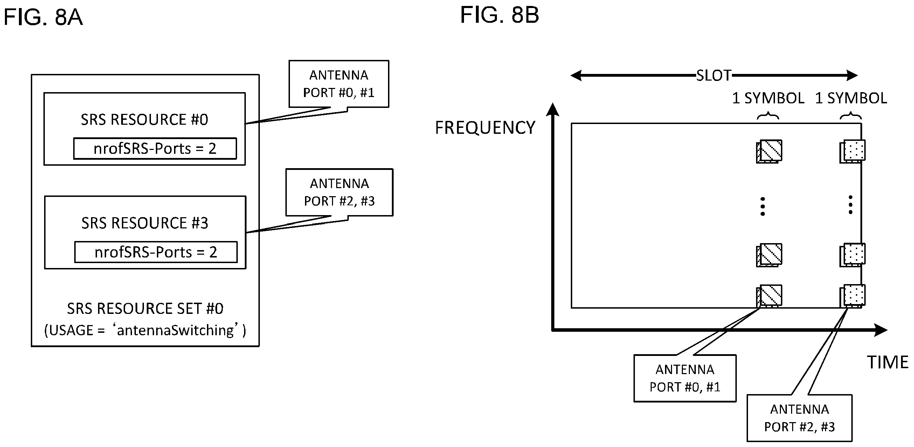

FIGS. 8A and 8B are diagrams to show an example of an SRS resource set for 2T4R. One SRS resource set (SRS resource set #0), shown in FIG. 8A, with antenna switching as usage includes SRS resources #0 and #3 with the number of SRS ports 2 (nrofSRS-Ports = 2 (ports2)).

FIG. 8B is a diagram to show an example of mapping of SRS resources corresponding to FIG. 8A. In FIG. 8B, the UE transmits two SRS resources by using 2 symbols. The UE may transmit SRS resource #0 with ports #0 and #1 at one symbol of FIG. 8B, and may transmit SRS resource #3 with ports #2 and #3 at another symbol.

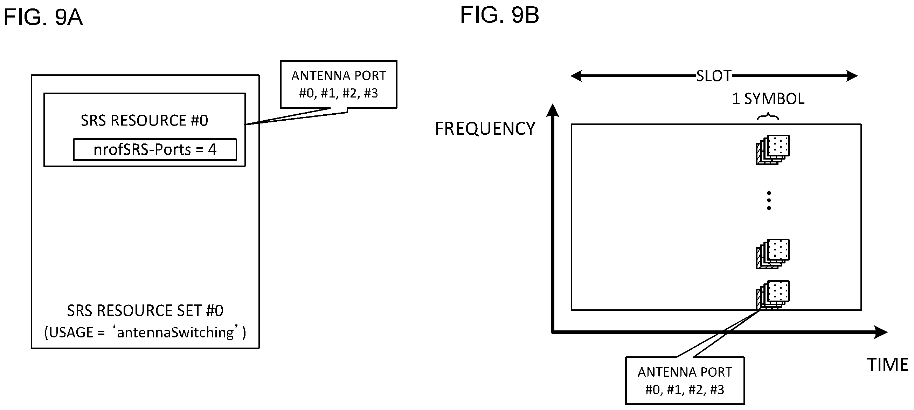

FIGS. 9A and 9B are diagrams to show an example of an SRS resource set for 4T4R. One SRS resource set (SRS resource set #0), shown in FIG. 9A, with antenna switching as usage includes SRS resource #0 with the number of SRS ports 4 (nrofSRS-Ports = 4 (ports4)).

FIG. 9B is a diagram to show an example of mapping of SRS resources corresponding to FIG. 9A. In FIG. 9B, the UE transmits one SRS resource by using one symbol. The UE may transmit SRS resource #0 with ports #0, #1, #2, and #3 at one symbol of FIG. 9B.

The SRS switching operation of Rel-15 NR, shown in FIG. 3 to FIG. 9 above, does not take UE capability for full power transmission into consideration. On the other hand, for Rel-16 (or later versions) NR, it is studied that the UE supporting mode 2 reports TPMIs (which may be interpreted as a combination of antenna ports) for full power PUSCH transmission to a network.

In the SRS switching operation of Rel-15 NR, correspondence between a UE antenna port number and an antenna port to perform SRS antenna switching is indefinite, and thus appropriate SRS switching depending on UE power amplifier capability is not available. In this case, there may be shortage of SRS transmit power (transmission with enough power may not be available), and consequently, an increase in communication throughput may be suppressed.

Thus, the inventors of the present invention came up with the idea of a method for appropriately transmitting an SRS. According to one aspect of the present disclosure, the UE can perform appropriate SRS switching in consideration of power amplifier (full power transmission) capability.

Embodiments according to the present disclosure will be described in detail with reference to the drawings as follows. The radio communication methods according to respective embodiments may each be employed individually, or may be employed in combination.

Note that the terms "antenna" and "antenna port" in embodiments below may be interchangeably interpreted.

In the present disclosure, the term "full power" may be interpreted as "power boosting," "maximum power," "enhanced power," "higher power as compared to Rel-15 UE," and so on.

In the present disclosure, having UE capability X (X = 1, 2, and 3), reporting the UE capability X, capability to perform full power transmission by using a structure for the UE capability X, and so on may be interchangeably interpreted.

In the present disclosure, having capability related to coherent (e.g., fully coherent, partial coherent, and non-coherent), reporting the capability, a case that the coherence is configured, and so on may be interchangeably interpreted.

A non-coherent UE, a partial coherent UE, and a fully coherent UE may be interchangeably interpreted as a UE having capability related to non-coherence, a UE having capability related to partial coherence, and a UE having a capability related to fully coherent, respectively.

A non-coherent UE, a partial coherent UE, and a fully coherent UE may mean a UE for which "non-coherent (nonCoherent)," "partial and non-coherent (partialAndNonCoherent)," and "fully, partial, and non-coherent (fullyAndPartialAndNonCoherent)" codebook subset is configured by a higher layer, respectively. Note that in the present disclosure, a codebook subset and a codebook may be interchangeably interpreted.

A non-coherent UE, a partial coherent UE, and a fully coherent UE may mean a UE that can perform transmission using a non-coherent codebook, a partial coherent codebook, and a fully coherent codebook, respectively.

The UE in respective embodiments below is assumed to be a UE that has reported information indicating support for full power UL transmission, but the embodiments may be employed in a UE that does not report this.

Note that in the present disclosure, reporting UE capability information indicating support for mode 2, the UE supporting mode 2, configuration of mode 2 for the UE, configuration of performing PUSCH transmission (full power transmission) in mode 2 for the UE, and the like may be interchangeably interpreted.

Embodiments below will be described assuming a case where performing PUSCH transmission (full power transmission) in mode 2 is configured for the UE that has reported UE capability information indicating support for mode 2, but it is apparent to a person ordinary skill in the art that the embodiments of the present disclosure can also be employed even in a case with an assumption of only either of these, in a case with no assumption of both of these, and the like.

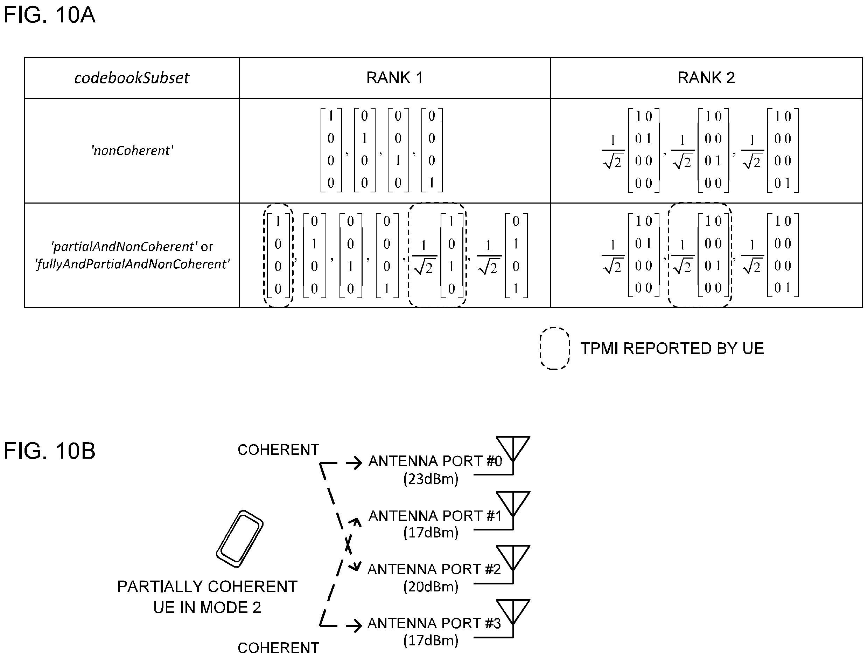

Note that respective embodiments below will be described assuming structures of antenna ports of FIGS. 10A and 10B, but it is apparent to a person ordinary skill in the art that the embodiments of the present disclosure can also be employed in a structure of another antenna port. FIGS. 10A and 10B are diagrams to show an example of the structures of the antenna ports assumed in one embodiment.

FIG. 10A is a diagram to show an example of TPMI (which may be interpreted as a codebook, a precoding matrix, and so on) subsets for full power transmission. The present example shows an example of TPMIs related to 4-ports transmission in ranks 1 and 2. The UE may transmit one or a plurality of TPMIs shown in FIG. 10A as capability information of antenna ports capable of performing full power transmission to the network.

In a case of a non-coherent UE, for example, with respect to rank 1, the UE may report one or a plurality of TPMIs out of W = [1 0 0 0]^{T}, [0 1 0 0]^{T}, [0 0 1 0]^{T}, and [0 0 0 1]^{T} (T denotes a transposed matrix; the same applies hereinafter).

In a case of a partially or fully coherent UE, for example, with respect to rank 1, the UE may report one or a plurality of W = [1 0 0 0]^{T}, [0 1 0 0]^{T}, [0 0 1 0]^{T}, and [0 0 0 1]^{T} as TPMIs with the number of non-zero PUSCH ports = 1. In the case of the partially or fully coherent UE, for example, with respect to rank 1, the UE may also report one or a plurality of W = 1/√2[1 0 1 0]^{T} and 1/√2[0 1 0 1]^{T} as TPMIs with the number of non-zero PUSCH ports = 2.

Here, the non-zero PUSCH port may mean an antenna port (antenna port with a non-zero value) for which transmission is indicated by a precoding matrix (codebook subset).

Assuming that a partially coherent UE has reported capability with three TPMIs (with respect to rank 1, W = [1 0 0 0]^{T} and W = 1/√2[1 0 1 0]^{T}) shown in FIG. 10A, it is conceivable that this UE has antenna port structures as shown in FIG. 10B. In other words, it may be assumed that antenna port #0 is capable of singly performing full power transmission (capable of outputting 23 dBm in a case of a power class 3 UE), antenna port #2 is capable of performing transmission at half power of full power (e.g., 20 dBm), and antenna ports #1 and #3 are capable of performing transmission at the half power or less (e.g., 17 dBm).

The UE that has reported the above-described capability with the TPMIs may assume that antenna ports #0 and #2 are mutually coherent (synchronized). The UE may also assume that antenna ports #1 and #3 are mutually coherent (synchronized).

### (Radio Communication Method)

### <First Embodiment>

In a first embodiment, a UE that has reported UE capability information indicating support for mode 2 may assume that all TPMIs out of TPMIs corresponding to coherent capability (an RRC parameter "pusch-TransCoherence") or TPMIs corresponding to a configured codebook subset (an RRC parameter "codebookSubset") can be designated regardless of capability for supporting full power transmission.

Here, the TPMIs corresponding to the coherent capability may mean, for example, the following:
- TPMIs corresponding to non-coherent are TPMIs for non-coherent codebooks,
- TPMIs corresponding to partially coherent are TPMIs for non-coherent codebooks and partially coherent codebooks, and
- TPMIs corresponding to fully coherent are TPMIs for non-coherent codebooks, partially coherent codebooks, and fully coherent codebooks.

Note that the TMPIs of the present disclosure may be interpreted as antenna ports (or a combination of antenna ports), codebooks, precoding matrices, precoding matrices corresponding to TPMIs, and the like used for codebook-based PUSCH transmission.

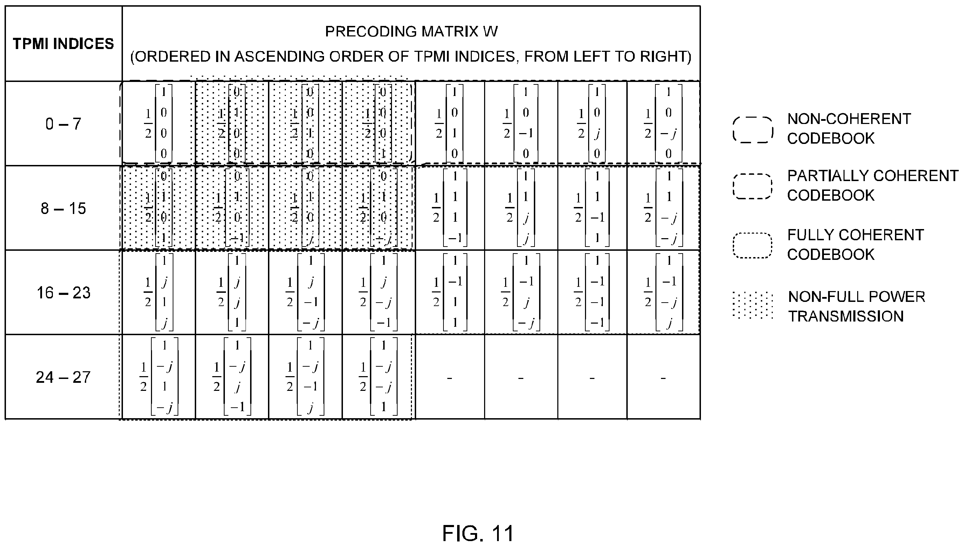

FIG. 11 is a diagram to show an example of TPMIs assumed for PUSCH transmission in the first embodiment. FIG. 11 shows precoding matrices similar to those of FIG. 1. The partially coherent UE shown in FIG. 10B may assume that all of TPMIs from 0 to 11 corresponding to partially and non-coherent (partialAndNonCoherent) can be designated in the first embodiment.

According to the antenna port structures of FIGS. 10A and 10B, when a TPMI = 1, 2, 3, 8, 9, 10, or 11 is designated by DCI, this UE may transmit a PUSCH at non-full power (because designated antenna port does not support full power transmission). On the other hand, when a TPMI = 0, 4, 5, 6, or 7 is designated by the DCI, this UE may transmit the PUSCH at full power.

The UE that has reported the UE capability information indicating support for mode 2 may assume the same SRS switching operation as that of Rel-15 NR, as shown in FIG. 3 to FIG. 9.

According to the first embodiment described above, even the UE in mode 2 can appropriately judge full power PUSCH transmission and can appropriately perform SRS switching.

### <Second Embodiment>

In a second embodiment, a UE that has reported UE capability information indicating support for mode 2 may assume that only TPMIs to support full power PUSCH transmission out of TPMIs corresponding to coherent capability (an RRC parameter "pusch-TransCoherence") or TPMIs corresponding to a configured codebook subset (an RRC parameter "codebookSubset") can be indicated.

In this case, the UE may assume that sizes of fields (e.g., sizes of precoding information and layer number fields) related to TPMIs included in DCI are determined on the basis of the number of the TPMIs that can be indicated.

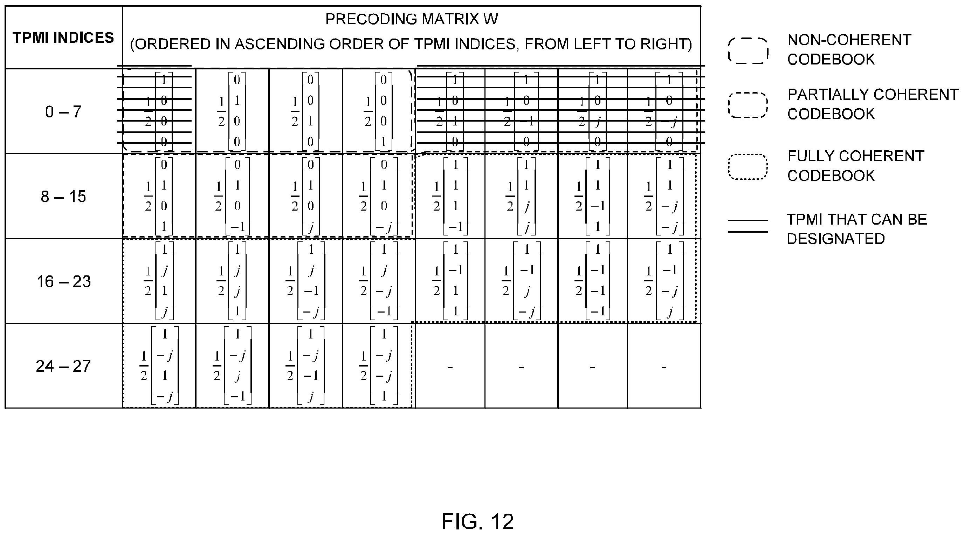

FIG. 12 is a diagram to show an example of TPMIs assumed for PUSCH transmission in the second embodiment. FIG. 12 shows precoding matrices similar to those of FIG. 1. The partially coherent UE shown in FIG. 10B may assume that only TPMIs = 0, 4, 5, 6, and 7 to support full power (corresponding to antenna ports capable of performing full power transmission) out of TPMIs from 0 to 11 corresponding to partially and non-coherent (partialAndNonCoherent) can be indicated in the second embodiment.

The UE that has reported the UE capability information indicating support for mode 2 may not assume that antenna ports to transmit SRSs (SRS ports) and UE antenna ports correspond to each other. In other words, the UE may not assume that port numbers of the SRS ports are fixed beforehand on the basis of given correspondence. The UE may autonomously determine the port numbers of the SRS ports (may transmit the SRSs from ports with port numbers determined autonomously).

Note that the UE antenna ports may be expressed using numbers, such as antenna port numbers p = 1000, 1001, 1002, 1003, ..., for example.

In the second embodiment, the UE that has reported the UE capability information indicating support for mode 2 may assume SRS switching operation different from that of Rel-15 NR when TPMIs to support full power out of TPMIs corresponding to coherent capability or TPMIs corresponding to a configured codebook subset are indicated.

Hereinafter, SRS switching operation according to the second embodiment will be described in detail.

### [1T4R and Resource Type = Periodic or Semi-persistent]

The UE that has reported capability to support mode 2 and capability to support supportedSRS-TxPortSwitch = t1r4 to a network may not expect that SRS antenna switching is performed by a combination of antenna ports indicated by TPMIs not to support full power when one SRS resource set with antenna switching as usage in which a resource type is periodic or semi-persistent is configured.

Note that in the present disclosure, supportedSRS-TxPortSwitch may be interpreted as UE capability information indicating a pattern of switching of transmission ports to support with respect to an arbitrary channel or signal.

The UE may assume that F pieces (in other words, F pieces from an SRS resource with a higher startPosition value) of SRS resources from an SRS resource with an earlier (older or more forward) OFDM symbol start position in a slot out of SRS resources included in the SRS resource set are not transmitted.

In this case, the number of symbols necessary for SRS antenna switching can be reduced, and thus resources assigned to another channel/signal, such as a PUSCH, increase, and throughput improvement can be expected. It is expected that SRSs for more UEs can be scheduled. Time necessary for the SRS antenna switching can be reduced.

The UE may assume that SRS resources other than SRS resources assumed not to be transmitted are transmitted in the SRS resource set.

In the present disclosure, F may be the number of antenna ports not used for full power transmission. For example, F = 2 (antenna ports #1 and #3) may be applied to the antenna port structures of the partially coherent UE of FIGS. 10A and 10B.

Note that in the present disclosure, "an earlier OFDM symbol start position in a slot" may be interpreted as "a later (newer or more backward) OFDM symbol start position in a slot," "a higher SRS resource ID value," "a lower SRS resource ID value," and the like, and may be interpreted as "a higher or lower SRS resource-related parameter."

Contents of the present disclosure in which "earlier" and "later" are interchangeably interpreted are also supported as an embodiment. Contents of the present disclosure in which "higher" and "lower" are interchangeably interpreted are also supported as an embodiment. Contents of the present disclosure in which "more" and "less" are interchangeably interpreted are also supported as an embodiment.

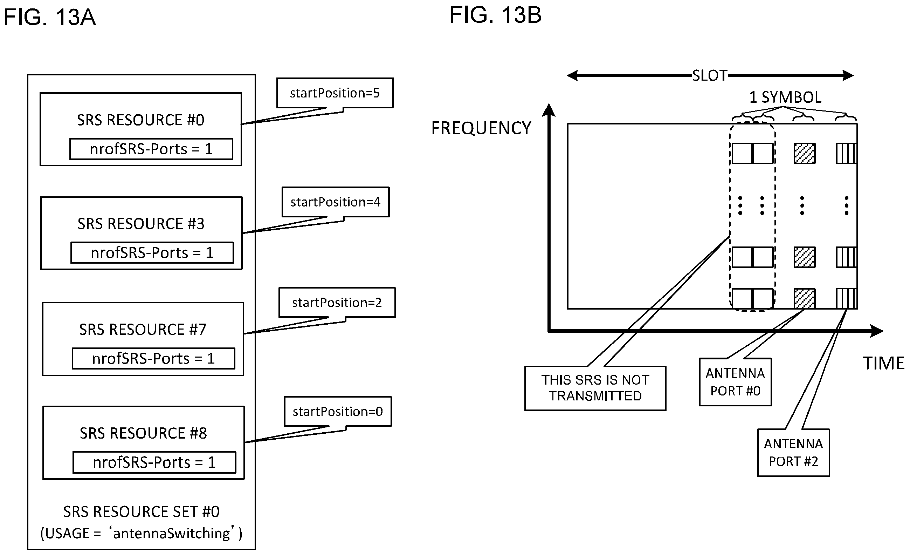

FIGS. 13A and 13B are diagrams to show an example of SRS antenna switching for an SRS resource set for 1T4R in the second embodiment. FIG. 13A shows an example of the SRS resource set with antenna switching as usage in which the resource type is periodic or semi-persistent. FIG. 13A describes a case where start positions (startPosition) for SRS resources #0, #3, #7, and #8 are set to 5, 4, 2, and 0, respectively, in the SRS resource set of FIG. 6A.

FIG. 13B is a diagram to show an example of mapping of SRS resources corresponding to FIG. 13A. In the present example, the UE may assume that F pieces of SRS resources from an SRS resource with an earlier OFDM symbol start position in a slot out of SRS resources included in the SRS resource set are not transmitted. In this case, the UE does not transmit SRSs for SRS resources #0 and #3. The UE may transmit an SRS for SRS resource #7 by using one (in FIG. 13B, antenna port #0) of antenna ports #0 and #2 capable of performing full power transmission, and may transmit an SRS for SRS resource #8 by using the other (in FIG. 13B, antenna port #2) of antenna ports #0 and #2 capable of performing full power transmission.

### [1T4R and Resource Type = Aperiodic]

The UE that has reported capability to support mode 2 and capability to support supportedSRS-TxPortSwitch = t1r4 to the network may not expect that SRS antenna switching is performed by a combination of antenna ports indicated by TPMIs not to support full power when two SRS resource sets with antenna switching as usage in which a resource type is aperiodic is configured.

When the two SRS resource sets include the same number of SRS resources (e.g., two SRS resources), the UE may assume that F pieces of SRS resources from an SRS resource with a higher or lower SRS resource ID value out of a set with a higher or lower SRS resource set ID are not transmitted.

When the two SRS resource sets include different numbers of SRS resources (e.g., one SRS resource set includes one SRS resource, and the other SRS resource set includes three SRS resources), the UE may assume that F pieces of SRS resources obtained by adding A pieces (e.g., 1 piece) of SRS resources included in an SRS resource set with a lower number of SRS resources and F-A pieces (e.g., 2-1 = 1 piece) of SRS resources from an SRS resource with an earlier or later OFDM symbol start position in the slot out of SRS resources included in an SRS resource set with a higher number of SRS resources are not transmitted.

Here, the A value may be predetermined by specifications, may be given by higher layer signaling, or may be determined depending on UE capability. For example, the A value may be derived on the basis of the F value. A may be the number of SRS resources included in an SRS resource set with a lower number of SRS resources.

According to these structures, the number of symbols necessary for SRS antenna switching can be reduced, and thus resources assigned to another channel/signal, such as a PUSCH, increase, and throughput improvement can be expected. It is expected that SRSs for more UEs can be scheduled. Time necessary for the SRS antenna switching can be reduced.

The UE may assume that SRS resources other than SRS resources assumed not to be transmitted are transmitted in the two SRS resource set.

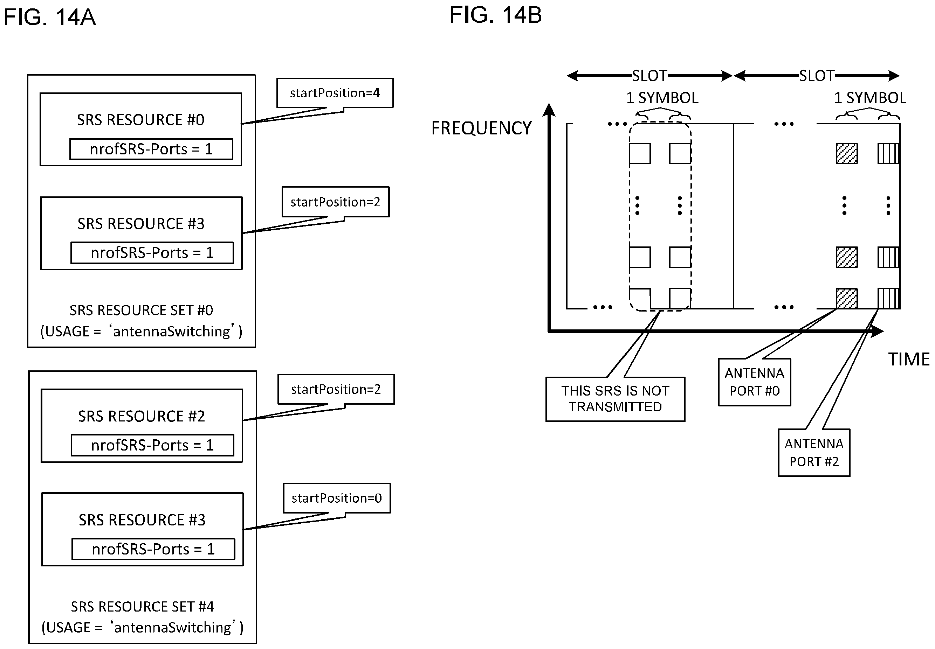

FIGS. 14A and 14B are diagrams to show another example of the SRS antenna switching for the SRS resource set for 1T4R in the second embodiment. FIG. 14A shows an example of the SRS resource set with antenna switching as usage in which the resource type is aperiodic. FIG. 14A describes a case where start positions (startPosition) for SRS resources #0 and #3 of SRS resource set #0 are configured to 4 and 2, respectively, and start positions (startPosition) for SRS resources #2 and #3 of SRS resource set #4 are configured to 2 and 0, respectively, in the SRS resource set of FIG. 7A.

FIG. 14B is a diagram to show an example of mapping of SRS resources corresponding to FIG. 14A. In the present example, when the two SRS resource sets include the same number of SRS resources, the UE may assume that F pieces of SRS resources from an SRS resource with a higher SRS resource ID value out of a set with lower SRS resource set ID are not transmitted. In this case, the UE does not transmit SRSs for the two SRS resources (SRS resources #0 and #3) of SRS resource set #0. The UE may transmit an SRS for SRS resource #2 of SRS resource set #4 by using one of antenna ports #0 and #2 capable of performing full power transmission, and may transmit an SRS for SRS resource #3 of SRS resource set #4 by using the other of antenna ports #0 and #2 capable of performing full power transmission.

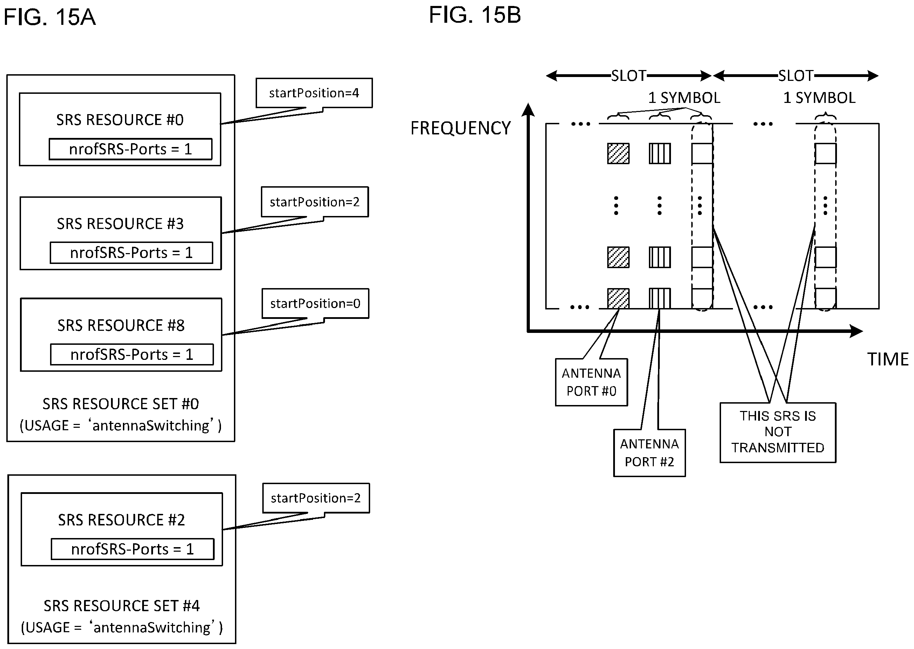

FIGS. 15A and 15B are diagrams to show still another example of the SRS antenna switching for the SRS resource set for 1T4R in the second embodiment. FIG. 15A shows an example of the SRS resource set with antenna switching as usage in which the resource type is aperiodic. Two SRS resource sets of FIG. 15A include different numbers of SRS resources.

SRS resource set #0 includes three SRS resources #0, #3, and #8 with the number of SRS ports 1 (nrofSRS-Ports = 1 (port1)). SRS resource set #4 includes one SRS resource #2 with the number of SRS ports 1 (nrofSRS-Ports = 1 (port1)).

A case where start positions (startPosition) for SRS resources #0, #3, and #8 of SRS resource set #0 are configured to 4, 2, and 0, respectively, and a start position (startPosition) for SRS resource #2 of SRS resource set #4 is configured to 2 will be described.

FIG. 15B is a diagram to show an example of mapping of SRS resources corresponding to FIG. 15A. In the present example, when the two SRS resource sets include different numbers of SRS resources, the UE assumes that F (= 2) pieces of SRS resources obtained by adding A (= 1) pieces of SRS resources included in an SRS resource set with a lower number of SRS resources and F-A (= 1) pieces of SRS resources from an SRS resource with a later OFDM symbol start position in a slot out of SRS resources included in an SRS resource set with a higher number of SRS resources are not transmitted.

In this case, the UE does not transmit an SRS for SRS resource #2 of SRS resource set #4 with a lower number of SRS resources. The UE does not transmit an SRS for SRS resource #8 with a later symbol start position in SRS resource set #0 with a higher number of SRS resources. The UE may transmit an SRS for SRS resource #0 of SRS resource set #0 by using one of antenna ports #0 and #2 capable of performing full power transmission, and may transmit an SRS for SRS resource #3 of SRS resource set #0 by using the other of antenna ports #0 and #2 capable of performing full power transmission.

### [2T4R]

The UE that has reported capability to support mode 2 and capability to support supportedSRS-TxPortSwitch = t2r4 to the network may not expect that SRS antenna switching is performed by a combination of antenna ports indicated by TPMIs not to support full power when one SRS resource set with antenna switching as usage is configured.

The UE may assume that an SRS resource with an earlier OFDM symbol start position in the slot (in other words, an SRS resource with a higher startPosition value) out of SRS resources with the number of SRS ports being F included in the SRS resource set are not transmitted.

In this case, the number of symbols necessary for SRS antenna switching can be reduced, and thus resources assigned to another channel/signal, such as a PUSCH, increase, and throughput improvement can be expected. It is expected that SRSs for more UEs can be scheduled. Time necessary for the SRS antenna switching can be reduced.

The UE may assume that SRS resources other than SRS resources assumed not to be transmitted are transmitted in the SRS resource set. Note that the UE may assume that all SRS resources of the SRS resource set are transmitted when F is higher or lower than a given value (e.g., 2).

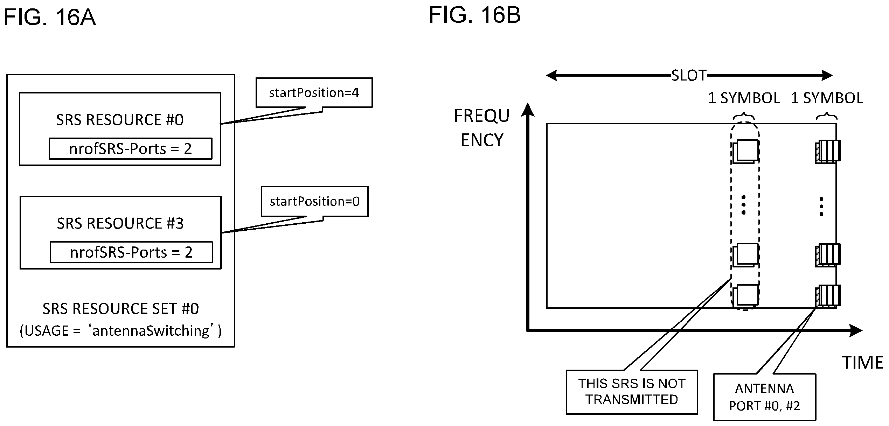

FIGS. 16A and 16B are diagrams to show an example of SRS antenna switching for an SRS resource set for 2T4R in the second embodiment. FIG. 16A shows an example of the SRS resource set with antenna switching as usage. FIG. 16A describes a case where start positions (startPosition) for SRS resources #0 and #3 are configured to 4 and 0, respectively, in the SRS resource set of FIG. 8A.

FIG. 16B is a diagram to show an example of mapping of SRS resources corresponding to FIG. 16A. In the present example, the UE may assume that an SRS resource with an earlier OFDM symbol start position in a slot out of SRS resources with the number of SRS ports being F (= 2) included in the SRS resource set is not transmitted. In this case, the UE does not transmit an SRS for SRS resource #0. The UE may transmit an SRS for SRS resource #3 by using antenna ports #0 and #2 capable of performing full power transmission.

### [4T4R]

The UE that has reported capability to support mode 2 and capability to support supportedSRS-TxPortSwitch = t4r4 to the network may not expect that SRS antenna switching is performed by a combination of antenna ports indicated by TPMIs not to support full power when one SRS resource set with antenna switching as usage is configured.

The UE may transmit, by reducing the number of SRS ports (nrofSRS-Ports) configured for an SRS resource included in the SRS resource set, the SRS resource. For example, the UE may assume that nrofSRS-Ports-F is the number of pieces of orthogonal multiplexing (e.g., the number of pieces of orthogonal multiplexing with cyclic shifts).

In this case, the number of pieces of multiplexing per UE with cyclic shifts in SRS antenna switching can be reduced, and thus it is expected that SRSs for more UEs can be scheduled.

The UE may transmit SRSs in SRS resources of the SRS resource set by using only antenna ports to support full power transmission.

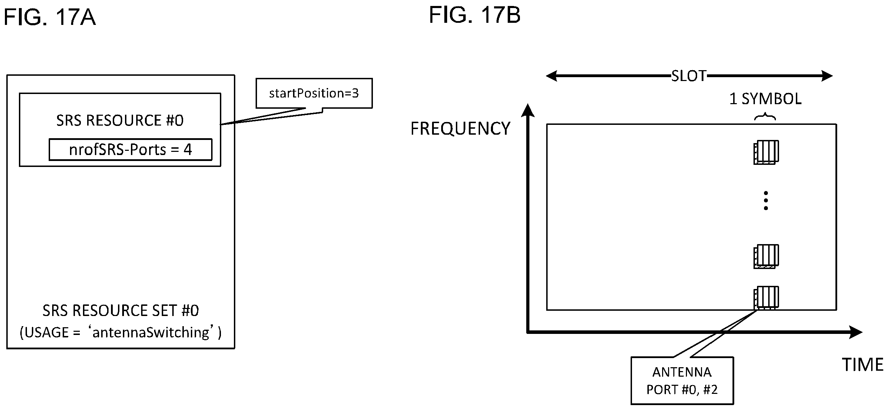

FIGS. 17A and 17B are diagrams to show an example of SRS antenna switching for an SRS resource set for 4T4R in the second embodiment. FIG. 17A shows an example of the SRS resource set with antenna switching as usage. FIG. 17A describes a case where a start position (startPosition) for SRS resource #0 is configured to 3 in the SRS resource set of FIG. 9A.

FIG. 17B is a diagram to show an example of mapping of SRS resources corresponding to FIG. 17A. In the present example, the UE transmits, by reducing the number of SRS ports (nrofSRS-Ports) = 4 configured for an SRS resource included in the SRS resource set, the SRS resource. In this case, the UE may transmit, by reducing an SRS for SRS resource #0 from configured 4-ports transmission to F (= 2)-ports transmission, the SRS by using antenna ports #0 and #2 capable of performing full power transmission.

According to the second embodiment described above, even the UE in mode 2 can appropriately judge full power PUSCH transmission and can appropriately perform SRS switching.

### <Third Embodiment>

In a third embodiment, a UE that has reported UE capability information indicating support for mode 2 may assume that only TPMIs to support full power out of TPMIs corresponding to coherent capability (an RRC parameter "pusch-TransCoherence") or TPMIs corresponding to a configured codebook subset (an RRC parameter "codebookSubset") can be indicated.

In this case, the UE may assume that sizes of fields (e.g., sizes of precoding information and layer number fields) related to TPMIs included in DCI are determined on the basis of the number of the TPMIs that can be indicated. The UE may assume that only TPMIs to support full power, as shown in FIG. 12, can be indicated.

The UE that has reported the UE capability information indicating support for mode 2 may assume that antenna ports to transmit SRSs (SRS ports) and UE antenna ports correspond to each other. In other words, the UE may assume that port numbers of the SRS ports are fixed beforehand on the basis of given correspondence.

In the third embodiment, the UE that has reported UE capability information indicating support for mode 2 may assume SRS switching operation different from that of Rel-15 NR when TPMIs to support full power PUSCH transmission out of TPMIs corresponding to coherent capability or TPMIs corresponding to a configured codebook subset are indicated.

Hereinafter, SRS switching operation according to the third embodiment will be described in detail.

A UE may assume that each SRS resource of one or a plurality of SRS resource sets with antenna switching as usage corresponds to a UE antenna port (one-to-one correspondence).

In the third embodiment, when performing SRS antenna switching, the UE may assume that SRS resources corresponding to (associated with) antenna ports incapable of transmitting a PUSCH at full power are not transmitted.

Note that when the number of SRS ports for a given SRS resource is 2 or more and the SRS resource includes both an antenna port incapable of transmitting the PUSCH at full power and an antenna port capable of transmitting the PUSCH at full power (in other words, capable of using for full power transmission), the UE may assume that in the SRS resource, SRSs are transmitted with use of the antenna port capable of transmitting at full power and SRSs are not transmitted via the antenna port incapable of transmitting at full power.

Correspondence between each SRS resource of one or a plurality of SRS resource sets with antenna switching as usage and a UE antenna port may be predetermined by specifications, or may be configured for the UE by higher layer signaling or the like. The UE may judge, on the basis of the correspondence, an association between each SRS resource of the one or the plurality of the SRS resource sets and the UE antenna port.

When two or more SRS resource sets with antenna switching as usage are configured, the UE may assume that antenna port indices correspond to resources in order from a resource set with a lower SRS resource set ID. In other words, the UE may assume that antenna port indices corresponding to SRS resources included in an SRS resource set with an SRS resource set ID corresponding to a first value are lower than antenna port indices corresponding to SRS resources included in an SRS resource set with an SRS resource set ID corresponding to a second value (the second value is higher than the first value).

Moreover, in other words, the UE may assume that an SRS resource with a higher SRS resource set ID corresponds to a higher antenna port index when SRS resources are arranged in ascending order of SRS resource set IDs.

The UE may assume that antenna port indices correspond to each SRS resource in order from an SRS resource with a lower SRS resource ID in one SRS resource set with antenna switching as usage. In other words, the UE may assume that an antenna port index corresponding to an SRS resource with an SRS resource ID in a given SRS resource set corresponding to a third value is lower than an antenna port index corresponding to an SRS resource with an SRS resource ID corresponding to a fourth value (the fourth value is higher than the third value).

Moreover, in other words, the UE may assume that an SRS resource with a higher SRS resource ID corresponds to a higher antenna port index when SRS resources included in the given SRS resource set are arranged in ascending order of SRS resource IDs.

For example, when SRS resource IDs of a first SRS resource to a fourth SRS resource are arranged in ascending order, the UE may assume that SRS port #0 for the first SRS resource corresponds to UE antenna port #0, SRS port #0 for the second SRS resource corresponds to UE antenna port #1, SRS port #0 for the third SRS resource corresponds to UE antenna port #2, and SRS port #0 for the fourth SRS resource corresponds to UE antenna port #3.

With respect to an SRS resource with the number of SRS ports being 2 or more in a case where a plurality of antenna ports can perform transmission at the same time, the UE may assume that SRS ports #0 and #1 for the SRS resource correspond to UE antenna ports #i and #i+1, respectively.

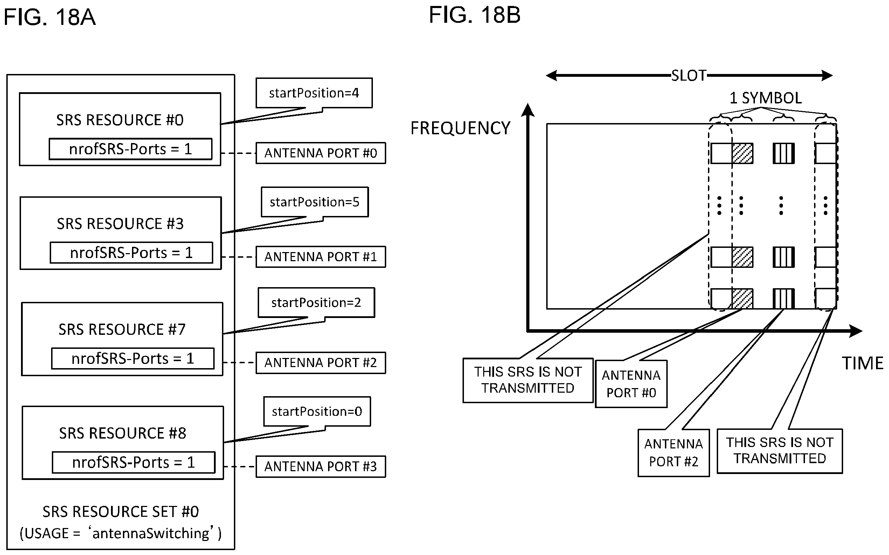

FIGS. 18A and 18B are diagrams to show an example of SRS antenna switching for an SRS resource set for 1T4R in the third embodiment. FIG. 18A shows an example of the SRS resource set with antenna switching as usage in which a resource type is periodic or semi-persistent. FIG. 18A describes a case where start positions (startPosition) for SRS resources #0, #3, #7, and #8 are set to 4, 5, 2, and 0, respectively, in the SRS resource set of FIG. 6A.

In accordance with the above-described rule, the UE may assume that SRS resources #0, #3, #7, and #8 correspond to antenna ports #0, #1, #2, and #3, respectively.

FIG. 18B is a diagram to show an example of mapping of SRS resources corresponding to FIG. 18A. In the present example, the UE assumes that SRS resources corresponding to antenna ports #1 and #3 incapable of performing full power transmission are not transmitted. In this case, the UE does not transmit SRSs for SRS resources #3 and #8. The UE may transmit an SRS for SRS resource #0 by using antenna port #0 capable of performing full power transmission, and may transmit an SRS for SRS resource #7 by using antenna port #2 capable of performing full power transmission.

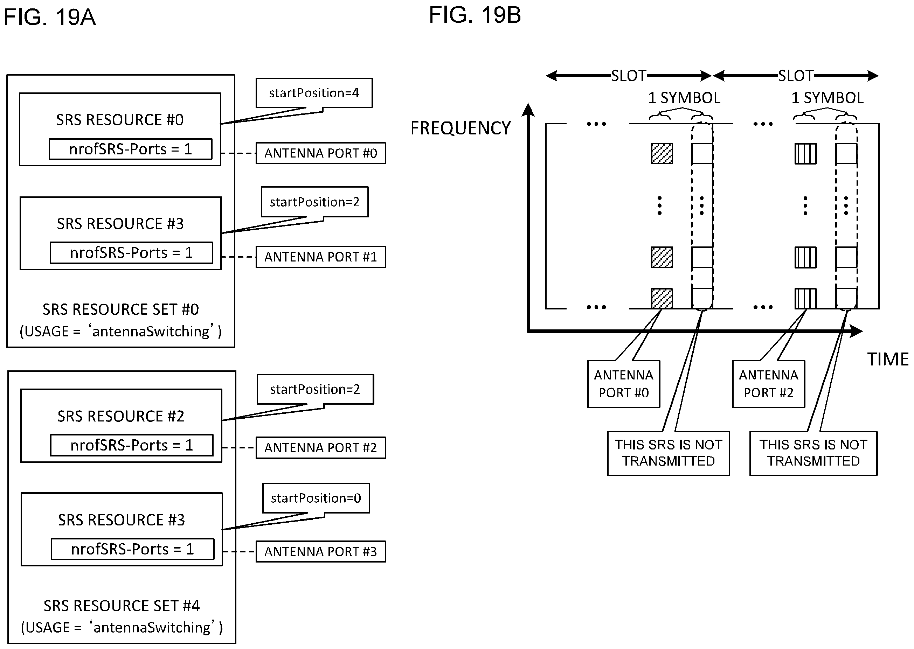

FIGS. 19A and 19B are diagrams to show another example of the SRS antenna switching for the SRS resource set for 1T4R in the third embodiment. FIG. 19A shows an example of the SRS resource set with antenna switching as usage in which a resource type is aperiodic. FIG. 19A shows the same SRS resource set as that of FIG. 14A.

In accordance with the above-described rule, the UE may assume that SRS resources #0 and #3 of SRS resource set #0 correspond to antenna ports #0 and #1, respectively, and SRS resources #2 and #3 of SRS resource set #4 correspond to antenna ports #2 and #3, respectively.

FIG. 19B is a diagram to show an example of mapping of SRS resources corresponding to FIG. 19A. In the present example, the UE assumes that SRS resources corresponding to antenna ports #1 and #3 incapable of performing full power transmission are not transmitted. In this case, the UE does not transmit SRSs for SRS resource #3 of SRS resource set #0 and SRS resource #3 of SRS resource set #4. The UE may transmit an SRS for SRS resource #0 of SRS resource set #0 by using antenna port #0 capable of performing full power transmission, and may transmit an SRS for SRS resource #2 of SRS resource set #4 by using antenna port #2 capable of performing full power transmission.

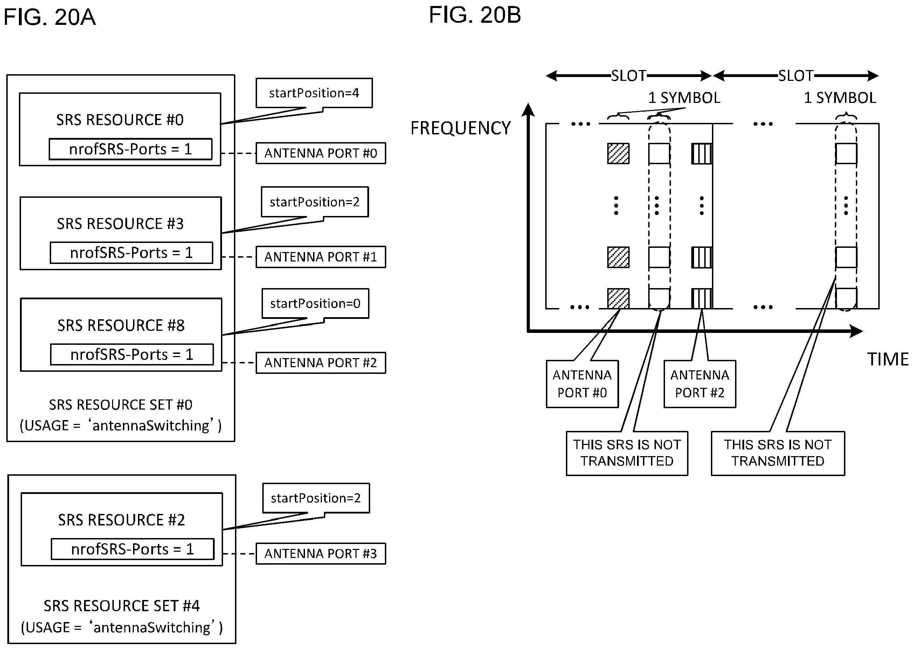

FIGS. 20A and 20B are diagrams to show still another example of the SRS antenna switching for the SRS resource set for 1T4R in the third embodiment. FIG. 20A shows an example of the SRS resource set with antenna switching as usage in which a resource type is aperiodic. FIG. 20A shows the same SRS resource set as that of FIG. 15A.

In accordance with the above-described rule, the UE may assume that SRS resources #0, #3, and #8 of SRS resource set #0 correspond to antenna ports #0, #1, and #2, respectively, and SRS resource #2 of SRS resource set #4 corresponds to antenna port #3.

FIG. 20B is a diagram to show an example of mapping of SRS resources corresponding to FIG. 20A. In the present example, the UE assumes that SRS resources corresponding to antenna ports #1 and #3 incapable of performing full power transmission are not transmitted. In this case, the UE does not transmit an SRS for SRS resource #3 of SRS resource set #0 and an SRS for SRS resource #2 of SRS resource set #4. The UE may transmit an SRS for SRS resource #0 of SRS resource set #0 by using antenna port #0 capable of performing full power transmission, and may transmit an SRS for SRS resource #8 of SRS resource set #0 by using antenna port #2 capable of performing full power transmission.

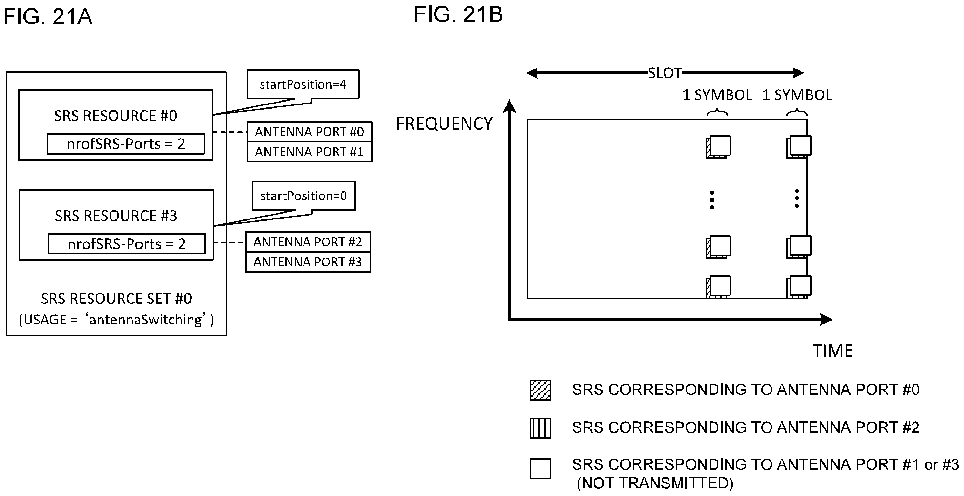

FIGS. 21A and 21B are diagrams to show an example of SRS antenna switching for an SRS resource set for 2T4R in the third embodiment. FIG. 21A shows an example of the SRS resource set with antenna switching as usage. FIG. 21A shows the same SRS resource set as that of FIG. 16A.

In accordance with the above-described rule, the UE may assume that SRS resource #0 corresponds to antenna ports #0 and #1 and SRS resource #3 corresponds to antenna ports #2 and #3.

FIG. 21B is a diagram to show an example of mapping of SRS resources corresponding to FIG. 21A. In the present example, in SRS resource #0, the UE may not transmit SRSs via antenna port #1 incapable of performing full power transmission, and may transmit SRSs via antenna port #0 capable of performing full power transmission. In SRS resource #3, the UE may not transmit SRSs via antenna port #3 incapable of performing full power transmission, and may transmit SRSs via antenna port #2 capable of performing full power transmission. In this case, the UE may not transmit SRSs to which cyclic shifts corresponding to antenna ports #1 and #3 are applied.

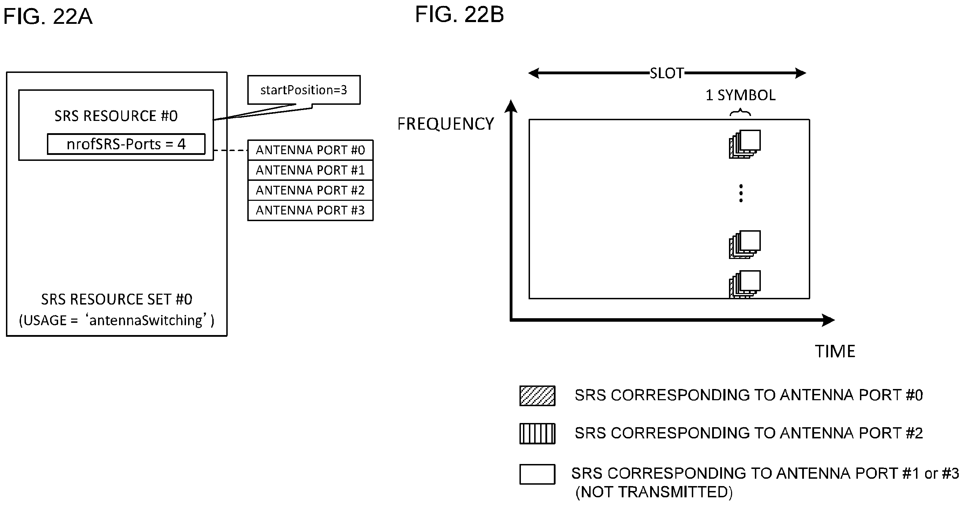

FIGS. 22A and 22B are diagrams to show an example of SRS antenna switching for an SRS resource set for 4T4R in the third embodiment. FIG. 22A shows an example of the SRS resource set with antenna switching as usage. FIG. 22A shows the same SRS resource set as that of FIG. 17A.

In accordance with the above-described rule, the UE may assume that SRS resource #0 corresponds to antenna ports #0, #1, #2, and #3.

FIG. 22B is a diagram to show an example of mapping of SRS resources corresponding to FIG. 22A. In the present example, in SRS resource #0, the UE may not transmit, via antenna ports #1 and #3 incapable of performing full power transmission, SRSs to which cyclic shifts corresponding to these are applied. In SRS resource #0, the UE may transmit SRSs via antenna ports #0 and #2 capable of performing full power transmission.

According to the third embodiment described above, even the UE in mode 2 can appropriately judge full power PUSCH transmission and can appropriately perform SRS switching.

### <Others>

The above-described respective embodiments mainly describe the UE capable of performing reception via 4 antennas (UE with supportedSRS-TxPortSwitch = txr4), but SRS transmission may be similarly controlled with respect to a UE with another supportedSRS-TxPortSwitch.

For example, the embodiment in which 4 antennas are interpreted as 2 antennas in the above-mentioned descriptions related to the UE with t2r4 may be employed in a UE with supportedSRS-TxPortSwitch = t1r2. The embodiment in which 4 antennas are interpreted as 2 antennas in the above-mentioned descriptions related to the UE with t4r4 may be employed in a UE with supportedSRS-TxPortSwitch = t2r2.

The antenna port of the above-mentioned respective embodiments may be an antenna port for at least one of a PUSCH, a phase tracking reference signal (PTRS), an uplink control channel (Physical Uplink Control Channel (PUCCH)), a random access channel (Physical Random Access Channel (PRACH)), a demodulation reference signal (DMRS), an SRS, and the like, and full power transmission may be applied to at least one of these signals and channels.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

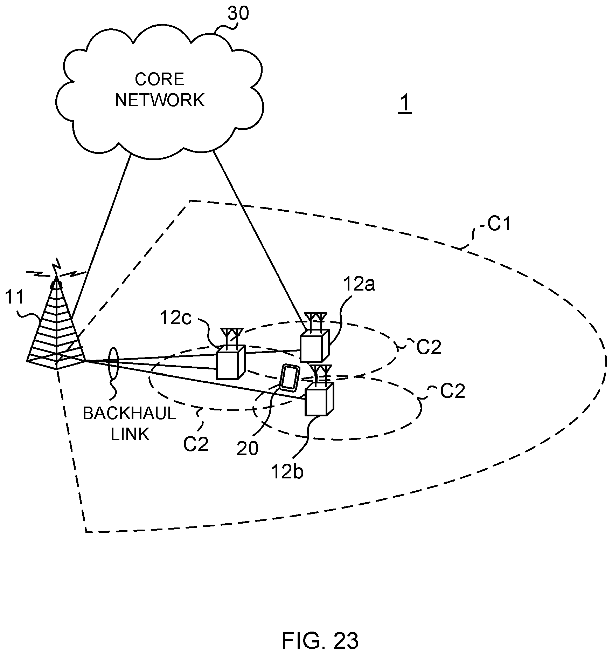

FIG. 23 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

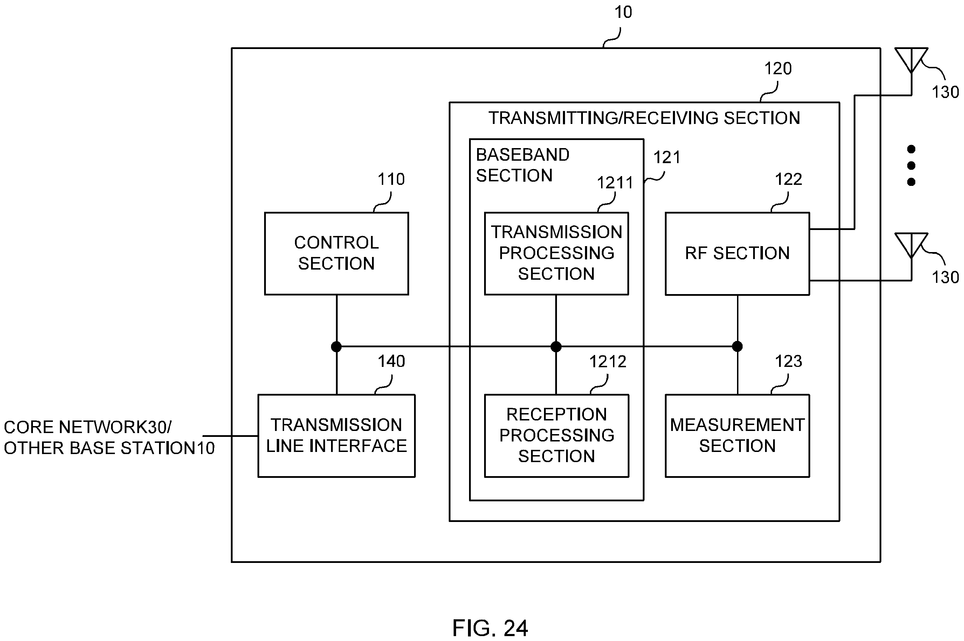

FIG. 24 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the control section 110 may perform, for the user terminal 20, control to transmit configuration information about one or more sounding reference signal (SRS) resource sets (e.g., an RRC parameter "SRS-ResourceSet") with antenna switching as usage.

### (User Terminal)

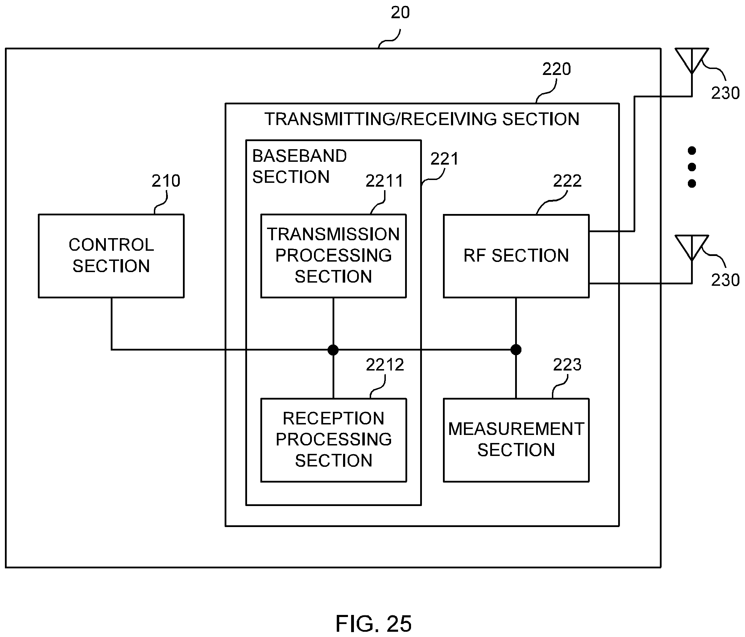

FIG. 25 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive configuration information about one or more sounding reference signal (SRS) resource sets (e.g., an RRC parameter "SRS-ResourceSet") with antenna switching as usage.

Note that "with antenna switching as usage" in the present disclosure may be interpreted as "with specific usage as usage (e.g., with codebook as usage)."

The control section 210 may control, on the basis of an antenna port capable of transmitting an uplink shared channel (PUSCH) at full power, transmission of SRS resources included in the one or more SRS resource sets (e.g., may control whether the transmission can be performed).

When capability information indicating a pattern of switching of transmission ports for a specific SRS has been reported (e.g., supportedSRS-TxPortSwitch = t1r4, t2r4, t4r4, tlr4-t2r4, or the like has been reported), the control section 210 may not expect that SRS antenna switching using an antenna port not to support full power is performed with respect to the SRS resources included in the one or more SRS resource sets.

The control section 210 may perform control not to transmit SRS resources for the number of antenna ports (= F) not used for full power transmission out of the SRS resources included in the one or more SRS resource sets.

The control section 210 may assume that each SRS resource of the one or more SRS resource sets corresponds, one-to-one, to an antenna port of the user terminal 20.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

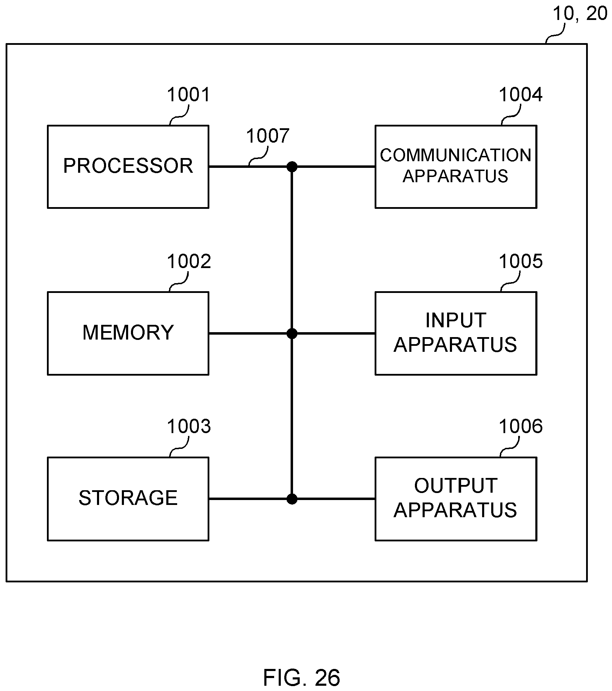

For example, a base station, a user terminal, and so on according to one embodiment of the present disclosure may function as a computer that executes the processes of the radio communication method of the present disclosure. FIG. 26 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information about one or more sounding reference signal (SRS) resource sets with antenna switching as usage; and
a control section that controls, on the basis of an antenna port capable of transmitting an uplink shared channel at full power, transmission of SRS resources included in the one or more SRS resource sets.

2. The terminal according to claim 1, wherein
when capability information indicating a pattern of switching of transmission ports for a specific SRS is reported, the control section does not expect that SRS antenna switching using an antenna port not to support full power is performed with respect to the SRS resources included in the one or more SRS resource sets.

3. The terminal according to claim 1 or 2, wherein
the control section performs control not to transmit SRS resources for the number of antenna ports not used for full power transmission out of the SRS resources included in the one or more SRS resource sets.

4. The terminal according to claim 1, wherein
the control section assumes that each SRS resource of the one or more SRS resource sets corresponds, one-to-one, to an antenna port of the terminal.

5. A radio communication method for a terminal, the radio communication method comprising:
receiving configuration information about one or more sounding reference signal (SRS) resource sets with antenna switching as usage; and
controlling, on the basis of an antenna port capable of transmitting an uplink shared channel at full power, transmission of SRS resources included in the one or more SRS resource sets.
